# EUROPÄISCHE PATENTSCHRIFT

(11) **EP 0 471 643 B1**
(45) Veröffentlichungstag und Bekanntmachung des Hinweises auf die Patenterteilung: **24.08.1994**
(21) Anmeldenummer: 91710023.2
(22) Anmeldetag: 05.06.1991
(51) Int. Cl.: F16K 1/02, F16K 27/02

(54) **Ventiloberteil**
Valve head
Tête de robinet

(30) Priorität: 14.08.1990 DE 4025654
(43) Veröffentlichungstag der Anmeldung: 19.02.1992
(73) Patentinhaber: Flühs Drehtechnik GmbH., D-58515 Lüdenscheid (DE)
(72) Erfinder: Lange, Peter, W-5880 Lüdenscheid (DE); Ziebach, Helmut, W-5880 Lüdenscheid (DE)
(74) Vertreter: Dörner, Lothar, Dipl.-Ing.

(56) Entgegenhaltungen:
- DE-A- 2 537 206
- DE-U- 8 524 528
- DE-U- 8 805 693
- FR-A- 1 279 365

## Beschreibung

### Technisches Gebiet:

Die Erfindung betrifft ein Ventiloberteil für Armaturen, bei dem in einem Kopfstück ein axial bewegbarer Ventilkolben und eine drehbare Spindel geführt sind, die über ein Gewinde miteinander verbunden sind.

Mit Hilfe von Ventiloberteilen wird z.B. der Wasseraustritt aus Sanitärarmaturen gesteuert. Zu diesem Zweck wird das Ventiloberteil mittels seines Kopfstücks in das Gehäuse der Sanitärarmatur geschraubt; auf seine Spindel wird ein Drehgriff oder ein Hebel gesteckt.

### Stand der Technik:

Abhängig von der Art, wie im Bereich eines koaxial zu dem Ventilkolben im Gehäuse der Sanitärarmatur vorgesehenen Ventilsitzes der Wasserdurchfluß gesteuert wird, werden im wesentlichen zwei Gruppen von Ventiloberteilen unterschieden. Bei der einen Gruppe (vgl. z.B. DE 85 24 528 U1) liegt nach dem Einschrauben des Ventiloberteils ein an der Stirnseite des Ventilkolbens vorgesehener Ventilteller mit einer an ihm befestigten Dichtungsscheibe auf dem Ventilsitz auf. Eine Drehung des Drehgriffs hat eine Drehbewegung der Spindel zur Folge, die über das Gewinde in eine Axialbewegung des Ventilkolbens umgewandelt wird, wodurch der Ventilsitz proportional zur Drehung des Drehgriffs von dem Ventilteller mit der Dichtungsscheibe freigegeben wird. Eine Drehung des Drehgriffs in entgegengesetzter Richtung hat das Schließen des Ventils zur Folge. Bei der anderen Gruppe (vgl. z.B. DE 32 07 895 C2) ist zwischen dem Kopfstück und dem Ventilsitz ein Dichtring unbeweglich verspannt. Im Bereich der dem Wasserzulauf zugewandten Stirnseite des Kopfstücks ist eine Festscheibe aus keramischem Material gehalten, die mit Durchtrittsöffnungen versehen ist. Anstelle des Ventilkolbens ist ein mit der Spindel drehbarer Mitnehmer vorgesehen. Von dem Mitnehmer ist eine Regelscheibe aus keramischem Material gehalten, die ebenfalls mit Duchtrittsöffnungen versehen ist und an der dem Wasserzulauf abgewandten Seite der Festscheibe anliegt. Eine Drehung des Drehgriffs hat eine Drehbewegung der Spindel und des Mitnehmers zur Folge, wodurch die Regelscheibe die Durchtrittsöffnungen der Festscheibe proportional zur Drehung des Drehgriffs öffnet oder schließt.

### Darstellung der Erfindung;

Die Erfindung bezweckt, eine weitere Gruppe von Ventiloberteilen zu schaffen. Ihr liegt die Aufgabe zugrunde, bei einem Ventiloberteil Verschleiß und Störanfälligkeit zu minimieren, die im wesentlichen bei der ersten Gruppe durch das Aufsetzen und das Abheben der Dichtscheibe von dem Ventilsitz, bei der zweiten Gruppe durch das Gleitreiben der keramischen Scheiben aneinander bedingt sind. Gemäß der Erfindung wird diese Aufgabe dadurch gelöst, daß von dem Kopfstück ein Dichtring gehalten ist, der über die dem Zulauf zugewandte Stirnseite des Kopfstücks vorsteht, an der vorstehenden äußeren Stirnseite als Fläche für ihre ruhende Anlage an einem Ventilsitz und auf der gegenüberliegenden inneren Stirnseite als mit dem Ventilkolben zusammenwirkende Lippendichtung ausgebildet ist, und daß der Ventilkolben in seinem mit der Lippendichtung zusammenwirkenden Teil eben und dichtungsfrei ausgeführt ist.

Bei der Erfindung liegt der Dichtring mit seiner äußeren Stirnfläche an dem Ventilsitz an. Unter einem Ventilsitz ist dabei auch die ebene Schulter einer in ein Gehäuse eingebrachten abgesetzten Bohrung zu verstehen. Die Lage des Dichtrings ist unabhängig davon, ob das Ventiloberteil sich im geschlossenen oder geöffneten Zustand befindet, durch das Kopfstück fixiert. Bei geschlossenem Ventiloberteil liegt die Lippendichtung des Dichtrings an dem Ventilkolben an. Unter einer Lippendichtung wird jede Dichtung verstanden, die abhängig von dem auf sie wirkenden hydrostatischen oder pneumatischen Druck aus einer in eine andere Endlage klappt und in sich flexibel ist. Der Ventilkolben ist in dem mit der Lippendichtung zusammenwirkenden Teil eben ausgeführt, er weist dort keinen Dichtungsring auf. Eine Drehung des Drehgriffs hat eine Drehung der Spindel zur Folge, die über das Gewinde in eine Axialbewegung des Ventilkolbens umgewandelt wird. Beim Öffnen des Ventiloberteils bewegt sich der Ventilkolben von der Lippendichtung weg, bis diese sich von dem Ventilkolben löst: Das Ventiloberteil ist geöffnet. Durch Wahl des Abstands des Ventilkolbens von dem Dichtring wird die durchgelassene Wassermenge gesteuert. Beim Schließen bewegt sich der Ventilkolben in Richtung der Lippendichtung, bis diese von dem - noch - durchströmenden Wasser gegen den benachbarten Teil des Ventilkolbens bewegt wird. Sobald die an dem Ventilkolben anliegende Fläche der Lippendichtung groß genug ist, wird die Lippendichtung über den anstehenden Wasserdruck vollständig und dicht gegen den Ventilkolben gepreßt. Dieses Öffnungs- und Schließspiel der Lippendichtung bezogen auf den Ventilkolben erfolgt in Abhängigkeit von der Stellung des Ventilkolbens unter der Wirkung des Wasserdrucks. Eine mechanische Pressung des Dichtrings oder mechanische Reibung findet nicht statt, was den Verschleiß der Spindel, des Gewindes zwischen Spindel und Ventilkolben, von Gleitscheiben und der Dichtungen, u.a. des Dichtrings, minimiert.

Ausgestaltungen und Weiterbildungen der Erfindung sind in den Unteransprüchen angegeben.

### Kurze Beschreibung der Zeichnungen:

Zwei Ausführungsbeispiele der Erfindung sind in der Zeichnung dargestellt und werden im folgenden näher beschrieben. Es zeigen:
- Fig. 1: zwei mit einer Sanitärarmatur verbundene Ventiloberteile im Längsschnitt, wobei die eine Hälfte die erste Ausführung in geschlossenem, die andere die zweite Ausführung in geöffnetem Zustand zeigt;
- Fig. 2: die Spindeln der beiden Ventiloberteile in Seitenansicht, ausschnittsweise im Längsschnitt;
- Fig. 3: die Ventilkolben der beiden Ventiloberteile im Längsschnitt;
- Fig. 4: den zu einem der Ventilkolben gehörenden Rückflußverhinderer in Seitenansicht;
- Fig. 5: außerdem den Dichtring der Ventiloberteile im Längsschnitt;
- Fig. 6: die Kopfstücke der Ventiloberteile im Längsschnitt;
- Fig. 7: den zu dem einen der Ventiloberteile gehörenden dreiteiligen Kopfstückaufsatz im Längsschnitt;
- Fig. 8: den zu dem anderen der Ventiloberteile gehörenden einteiligen Kopfstückaufsatz im Längsschnitt.

### Bester Weg zur Ausführung der Erfindung:

Das als Ausführungsbeispiel gewählte Ventiloberteil weist im wesentlichen fünf miteinander verbundene oder gegeneinander geführte Teile auf, nämlich ein Kopfstück 1, eine das Kopfstück 1 mittig durchsetzende und in ihm radial geführte Spindel 2, einen mit der Spindel 2 verschraubten und im Kopfstück 1 axial geführten Ventilkolben 3, einen mit dem Kopfstück 1 verschraubten Kopfstückaufsatz 4 sowie einen von dem Kopfstück 1 gehaltenen Dichtring 5.

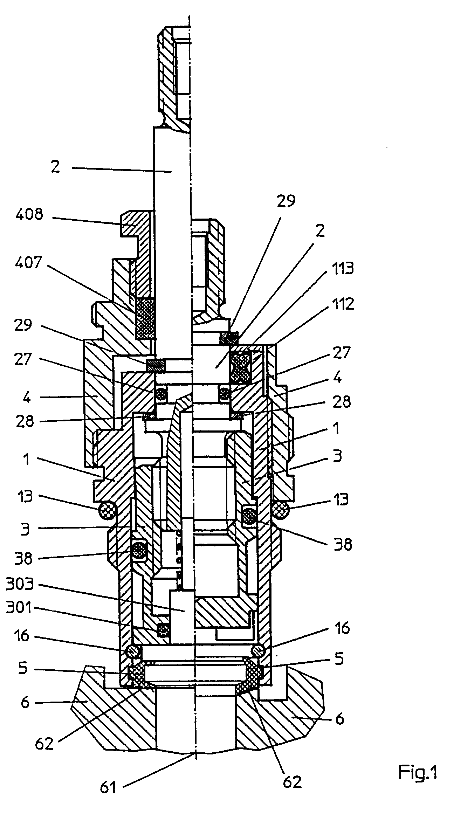

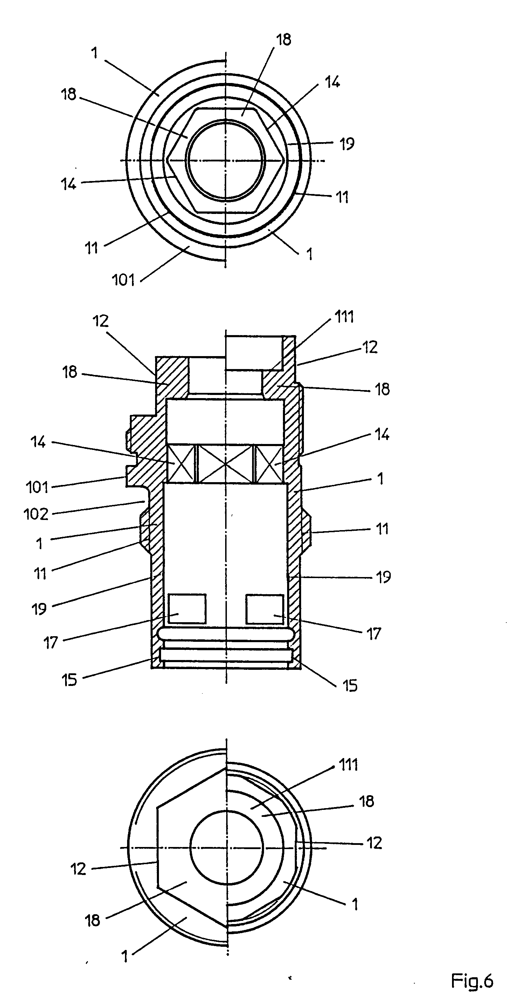

Das Kopfstück 1 besteht aus einem symmetrischen Hohlkörper, dessen beide Stirnflächen offen sind - vgl. Fig. 1 und 6 -. Etwa mittig weist das Kopfstück 1 ein Außengewinde 11 auf, mit dem es in das Gehäuse einer nur mit einem Teil eines Wasserzulaufkanals dargestellten Sanitärarmatur 6 schraubbar ist. Nach dem Einschrauben des Ventiloberteils ist zwischen Kopfstück 1 und Sanitärarmatur ein Dichtring 13 angeordnet. Das Einschrauben des Kopfstücks 1 in die Sanitärarmatur erfolgt mittels Schlüsselflächen 12, die im Bereich der äußeren Stirnseite außen an dem Kopfstück 1 vorgesehen sind. Im Bereich dieser Stirnseite ist das Kopftstück 1 mit einem eingezogenen Rand 18 versehen, an dem die Spindel 2 axial abgestützt und radial geführt ist. An den Rand 18 schließt ein Innenprofil 14 an, daß zur Vermeidung von Verdrehungen und für die Axialführung des Ventilkolbens 3 vorgesehen ist. Auf der Wasserzulaufseite schließt an das Innenprofil 14 eine Zylinderfläche 19, die ebenfalls der Führung des Ventilkolbens 3 dient. Im Abstand von der gegenüberliegenden, also der dem Wasserzulauf zugewandten Stirnseite, ist das Kopfstück 1 mit einer Innenringnut 15 versehen, die den Dichtring 5 aufnimmt. In dem Kopfstück 1 ist im Abstand von dem Dichtring 5 ein Anschlag für die Begrenzung der Axialbewegung des Ventilkolbens 3 in Richtung des Wasserzulaufs in der Form eines in die Innenwand eingerasteten Sprengrings 16 vorgesehen. Dadurch daß der Ventilkolben 3 zunächst gegen die elastische Lippendichtung 52 und dann gegen den festen Anschlag in der Form des Sprengrings 16 fährt, wird die Deformierung des Dichtrings 5 verhindert. Auf der der Innenringnut 15 abgewandten Seite des Sprengrings 16 sind in dem Kopfstück 1 Fenster 17 für den Wasserdurchtritt vorgesehen, die in derselben Querebene symmetrisch verteilt in seiner Wandung ausgespart sind. Die Fenster 17 haben im Ausführungsbeispiel rechteckige Form. Sie können ausgehend von der dem Wasserzulauf zugewandten Kante in der Breite zunehmen oder abnehmen - z.B. die Form eines auf der Spitze oder auf der Basis stehenden gleichschenkligen Dreiecks aufweisen -, wodurch eine progressive oder eine degressive Steuerung der Durchflußmenge erzielt wird.

Bei der in den Zeichnungen links dargestellten Ausführung liegt nach dem Einschrauben ein etwa mittig angeordneter Außenflansch 101 des Kopfstücks 1 auf dem Gehäuse der Sanitärarmatur auf. Der Außenflansch 101 weist auf seiner dem Außengewinde 11 zugewandten Seite eine Ringnut 102 für die Aufnahme des Dichtrings 13 auf. Bei der in den Zeichnungen rechts dargestellten Ausführung ist der Dichtring 13 von dem Kopfstückaufsatz 4 gehalten. Bei dieser Ausführung weist der Rand 18 des Kopfstücks 1 eine Innenschulter 111 auf, die ein innen an der Spindel 2 anliegendes radial vorgespanntes Gleitlager 112 aufnimmt. Das Gleitlager 112 ist stirnseitig mittels einer Lastscheibe 113 abgedeckt. Das Gleitlager 112 verhindert Spiel der Spindel 2 in Radialrichtung.

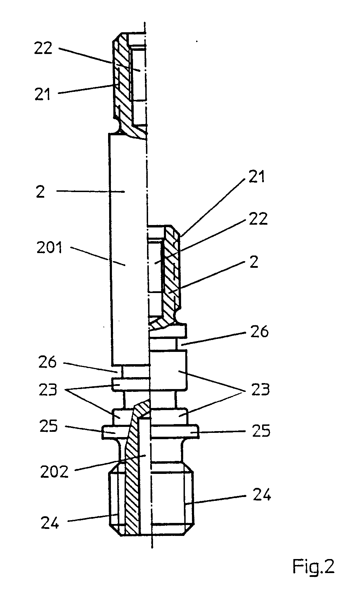

Die Spindel 2 ist im wesentlichen massiv ausgeführt und weist einen Steckkopf auf - vgl. Fig. 1 und 2 -. Sie ist an ihrer einen Stirnseite außen als Vielkant ausgeführt und innen mit einem Sackloch 22 mit Innengewinde für die Befestigung eines nicht dargestellten Drehgriffs oder Hebels versehen. Im Abstand von dem Steckkopf ist außen an der Spindel 2 eine Ringfläche 23 vorgesehen, mit der die Spindel 2 an dem Rand 18 radial geführt ist. Die Ringfläche 23 ist von einer Ringnut unterbrochen, die einen Dichtring 27 aufnimmt. Auf der dem Vielkant 21 entgegengesetzten Seite ist die Spindel 2 außen mit einem einen Teil eines Bewegungsgewindes dargestellten Außengewindes 24 versehen. Im Anschluß an die Ringfläche 23 ist auf der dem Außengewinde 24 zugewandten Seite ein Flansch 25 vorgesehen, der unter Zwischenfügung einer Gleitscheibe 28 innen an dem Rand 18 anliegt und den bei Betätigung der Spindel 2 auftretenden Axialdruck aufnimmt. Auf der dem Vielkant 21 zugewandten Seite ist ein Einstich 26 vorgesehen, der einen Sicherungsring 29 aufnimmmt, der außen auf dem Rand 18 bzw. auf der Lastscheibe 113 liegt. Der im wesentlichen als Vollzylinder ausgebildete Bereich zwischen dem Flansch 25 und dem Außengewinde 24 ist so dimensioniert, daß die Spindel 2 allen auftretenden Belastungen sicher standhält.

Bei der in den Zeichnungen links dargestellten Ausführung ist die Spindel 2 z.B. für Unterputzmontage in dem Stück zwischen Vielkant 21 und Ringflansch 23 durch einen Zwischenzylinder 201 verlängert. Auf der dem Vielkant 21 entgegengesetzten Seite ist axial eine Sackbohrung 202 eingebracht.

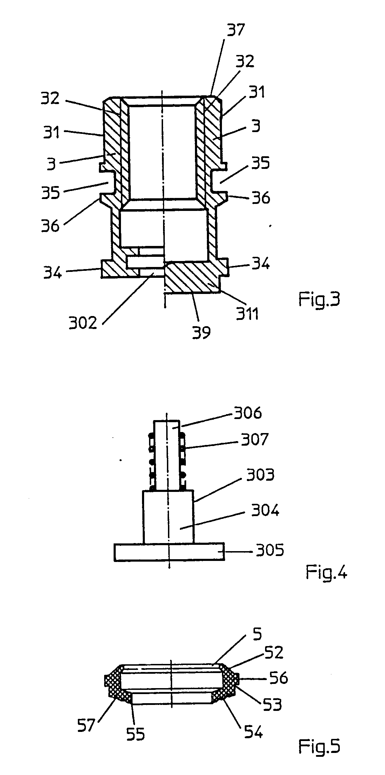

Der Ventilkolben 3 weist - vgl. Fig. 1, 3 und 4 - auf seiner einen Stirnseite ein Außenprofil 31, mit dem der Ventilkolben 3 in dem Innenprofil 14 des Kopfstücks 1 axial geführt ist, und ein den anderen Teil des Bewegungsgewindes darstellendes Innengewinde 32 auf, in das das Außengewinde 24 der Spindel 2 geschraubt ist. Eine Drehung der Spindel 2 mittels des nicht dargestellten Drehgriffs wird über das Bewegungsgewinde 24, 32 sowie das Außenprofil 31 und das Innenprofil 14 in eine Axialbewegung des Ventilkolbens 3 umgewandelt. Bei dieser Axialbewegung hebt oder senkt sich die dem Wasserzulauf zugewandte Stirnseite des Ventilkolbens 3 bezogen auf einen in einem Wasserzulauf 61 der Sanitärarmatur 6 vorgesehenen Ventilsitz 62. Bei dieser Axialbewegung wird der Ventilkolben 3 außerdem mittels eines im Bereich seiner Wasserzulaufseite angeformten Außenflansches 34 sowie eines im Anschluß an den Außenmehrkant 31 angeformten Außenflansches 36 einerseits und der Zylinderfläche 19 in dem Kopfstück 1 andererseits geführt. In dem Außenflansch 36 ist eine Ringnut 35 für die Aufnahme eines Dichtungsrings 38 vorgesehen. Der Dichtungsring 38 dichtet das Ventiloberteil insgesamt nach außen, wobei das Bewegungsgewinde 24, 32 im abgedichteten Bereich liegt. Für den Betrieb des Bewegungsgewindes 24, 32 notwendiges Fett bleibt unberührt vom Wasser.

Die Axialbewegung des Ventilkolbens 3 in Richtung des Ventilsitzes 62 ist durch Anschlag des Außenflansches 34 an dem Sprengring 16, in entgegengesetzter Richtung durch Anschlag der Stirnseite 37 an dem Flansch 25 der Spindel 2 begrenzt. Dadurch daß der Ventilkolben 3 zwischen zwei Festanschlägen bewegt wird, kann über die Steigung des Bewegungsgewindes und den Hub der Drehwinkel fixiert werden, z.B. wahlweise auf 90°, 180° etc. Dies ist von Bedeutung bei asymmetrischen, in bestimmten Stellungen montierten Griffen.

Bei der in der Zeichnung links dargestellten Ausfürhung weist die dem Wasserzulauf zugewandte Stirnseite des Ventilkolbens 3 eine durch einen Dichtring 301 abgedichtete Bohrung 302 auf. Die Bohrung 302 nimmt einen Rückflußverhinderer 303 auf. Der Rückflußverhinderer 303 ist von einem in der Bohrung 302 gehaltenen Schaft 304 gebildet, an dem außen ein an der Stirnseite des Ventilkolbens 3 anliegender Teller 305 und innen ein in der Sackbohrung 202 der Spindel 2 geführter Stößel 306 angeformt sind. Zwischen den einander zugewandten Stirnseiten des Schafts 304 und der Spindel 2 ist eine den Stößel 306 umgebende Schraubenfeder 307 angeordnet. Der Rückflußverhinderer 303 verhindert den Rückfluß von Wasser bei drucklos gewordenem Wasserzulauf 61 in tiefer gelegene, an dasselbe Wassernetz angeschlossene Stellen bei geöffnetem Ventilkolben 3. Bei der in der Zeichnung rechts dargestellten Ausführung ist die Stirnseite selbst nach Art eines nicht durchbrochenen Tellers 311 ausgeführt. Beide Teller 305, 311 sind an ihren dem Ventilsitz 62 zugewandten Seite eben und ohne Dichtungsring ausgeführt. Zum Rand oder zur Mitte hin können die Teller mit einer umlaufenden Abschrägung versehen sein. Die Abschrägung ist aus strömungstechnischen Gründen vorgesehen: Die Geräuschbildung beim Öffnen und Schließen des Ventils wird minimiert.

Von dem Kopfstück 1 ist der Dichtring 5 gehalten - vgl. Fig. 1 und 5 -. Der Dichtring 5 weist ein Mittelstück 53 auf. An die Außenfläche des Mittelstücks 53 ist ein Bund 56 angeformt, der in die Innenringnut 15 in dem Kopfstück 1 eingreift. An das Mittelstück 53 ist auf der dem Wasserzulauf zugewandten Stirnseite ein nach Art eines Federtellers ausgebildeter Ansatz 55 angeformt. Mit dem Ansatz 55 steht der Dichtring 5 über die dem Wasserzulauf zugewandte Stirnseite des Kopfstücks 1 vor. An der vorstehenden äußeren Stirnseite ist der Ansatz 55 als Fläche 54 für ihre ruhende Anlage an dem Ventilsitz 62 ausgebildet. Der Ansatz 55 ist auf seiner Anlagefläche 54 mit ringförmigen Kerben 57 versehen. Auf der gegenüberliegenden inneren Stirnseite ist der Dichtring 5 als mit der Stirnseite 39 bzw. dem Teller 305 zusammenwirkende Lippendichtung 52 aus gebildet. Auch die Lippendichtung 52 ist an das Mittelstück 53 angeformt. Das Mittelstück 53, die Lippendichtung 52 und der Ansatz 55 weisen jeweils im wesentlichen trapezförmigen Querschnitt auf.

Bei der in der Zeichnung links dargestellten Ausführung besteht der Ventilsitz 62 aus einer ebenen Schulter, die sich am Ende des Wasserzulaufs 61 radial anschließt. Bei der rechts dargestellten Ausführung ist ein bei Armaturen üblicher schräger Ventilsitz 62 am Ende des Wasserzulaufs vorgesehen.

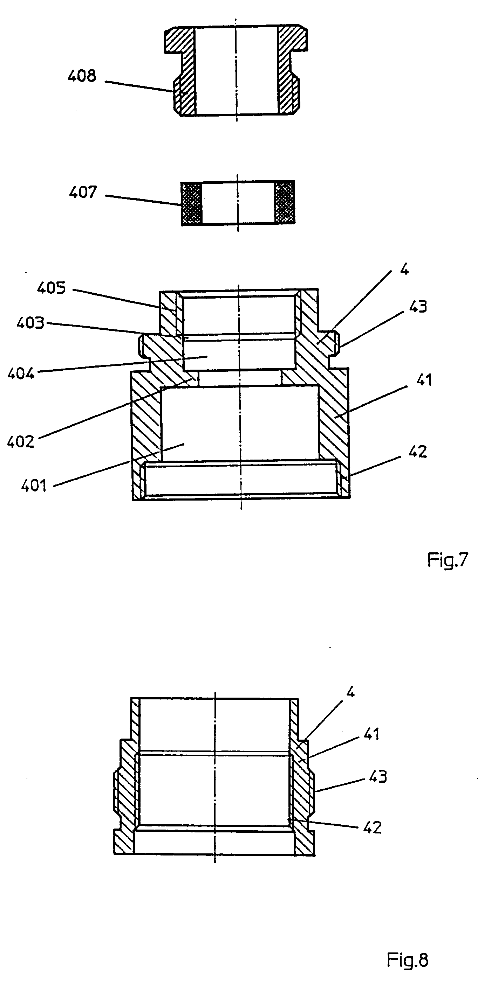

Der Kopfstückaufsatz 4 besteht aus einem im wesentlichen hohlzylindrischen Körper 41, der für seine Verschraubung mit dem Kopfstück 1 ein Innengewinde 42 sowie für die Befestigung einer Abdeckhaube ein Außengewinde 43 aufweist - vgl. Fig. 1, 7 und 8 -.

Bei der in der Zeichnung links dargestellten Ausführung ist der Kopfstückaufsatz 4 Teil einer einstellbaren Spindelbremse: Eine an das Innengewinde 42 anschließende Aufnahme 401 für den oberen Teil des Kopfstücks 1 ist durch einen Bund 402 von einer Bohrung 403 getrennt, die im Fußteil 404 ohne, im Kopfteil 405 mit Gewinde 406 ausgeführt ist. Das Fußteil 404 nimmt eine Packung 407 auf, in das Gewinde 406 ist ein die Spindel 2 umgebender Stopfen 408 geschraubt. Durch Anziehen des Stopfens 408 ist der Anpreßdruck, den die Packung 407 auf die Spindel 2 ausübt, einstellbar. Auf diese Weise ist das Betätigungsmoment für das Ventiloberteil einstellbar, was insbesondere bei asymmetrischen schweren Hebelgriffen an horizontal, z.B. unter Putz, eingesetzten Ventiloberteilen von Bedeutung ist, um eine Selbstöffnung oderschließung des Ventils zu verhindern. Bei der in den Figuren rechts dargestellten Ausführung ist der Kopfstückaufsatz 4 Bestandteil des dann zweiteiligen Kopfstücks. Diese Ausführung ermöglicht den Einbau bei unterschiedlichen Tiefen des Ventilsitzes 62 und ist besonders zweckmäßig bei Nachrüstung und Sanierungsprojekten.

Die Elemente, die jeweils der in der Zeichnung links dargestellten Ausführung zugeordnet sind, können auch der rechts dargestellten Ausführung zugeordnet werden und umgekehrt.

### Gewerbliche Verwertbarkeit:

Das Ventiloberteil nach der Erfindung ist nicht nur bei Sanitärarmaturen, sondern auch bei anderen Armaturen zur Steuerung des Durchflusses unterschiedlicher Medien einsetzbar, das ist neben Wasser z.B. Gas oder Öl.

## Patentansprüche

1. Ventiloberteil für Armaturen, bei dem in einem Kopfstück (1) ein axial bewegbarer Ventilkolben (3) und eine drehbare Spindel (2) geführt sind, die über ein Gewinde (24;32) miteinander verbunden sind, dadurch gekennzeichnet, daß von dem Kopfstück (1) ein Dichtring (5) gehalten ist, der über die dem Zulauf zugewandte Stirnseite des Kopfstücks (1) vorsteht, an der vorstehenden äußeren Stirnseite als Fläche (54) für ihre ruhende Anlage an einem Ventilsitz (62) und auf der gegenüberliegenden inneren Stirnseite als mit dem Ventilkolben (3) zusammenwirkende Lippendichtung (52) ausgebildet ist, und daß der Ventilkolben (3) in seinem mit der Lippendichtung zusammenwirkenden Teil eben und dichtungsfrei ausgeführt ist.

2. Ventiloberteil nach Anspruch 1, dadurch gekennzeichnet, daß der Dichtring (5) ein von dem Kopfstück (1) gehaltenes Mittelstück (53) aufweist, an das einerseits die Lippendichtung (52), andererseits ein die Anlagefläche (54) für den Ventilsitz (62) aufweisender, nach Art eines Federtellers ausgebildeter Ansatz (55) angeformt ist.

3. Ventiloberteil nach Anspruch 2, dadurch gekennzeichnet, daß das Mittelstück (53), die Lippendichtung (52) und der Ansatz (55) trapezförmigen Querschnitt aufweisen.

4. Ventiloberteil nach Anspruch 2 oder 3, dadurch gekennzeichnet, daß an die Außenfläche des Mittelstücks (53) ein Bund (56) angeformt ist, der in eine Nut in dem Kopfstück (1) eingreift.

5. Ventiloberteil nach einem der Ansprüche 2 bis 4, dadurch gekennzeichnet, daß der Ansatz (55) auf seiner Anlagefläche (54) mit ringförmigen Kerben (57) versehen ist.

6. Ventiloberteil nach einem der Ansprüche 1 bis 5, dadurch gekennzeichnet, daß in dem Kopfstück (1) Anschläge für die Begrenzung der Axialbewegung des Ventilkolbens (3) vorgesehen sind.

7. Ventiloberteil nach Anspruch 6, dadurch gekennzeichnet, daß etwa in Höhe der Lippendichtung (52) ein Sprengring (16) in das Kopfstück (1) eingelassen ist, gegen den der Ventilkolben (3) in seiner unteren Endlage stößt.

8. Ventiloberteil nach Anspruch 6, dadurch gekennzeichnet, daß an der Spindel (2) im Abstand von dem Gewinde (24,32) ein Flansch (25) angeformt ist, gegen den der Ventilkolben (3) in seiner oberen Endlage stößt.

9. Ventiloberteil nach einem der Ansprüche 1 bis 8, dadurch gekennzeichnet, daß der Ventilkolben (3) auf der dem Dichtring (5) zugewandten Stirnseite als nicht durchbrochener Teller (311) ausgeführt ist.

10. Ventiloberteil nach einem der Ansprüche 1 bis 8, dadurch gekennzeichnet, daß der Ventilkolben (3) mit einem Rückflußverhinderer (303) versehen ist.

11. Ventiloberteil nach Anspruch 10, dadurch gekennzeichnet, daß der Rückflußverhinderer (303) von einem Schaft (304), der in einer auf der dem Zulauf zugewandten Stirnseite des Ventilkolbens (3) vorgesehenen Bohrung (302) gehalten ist, von einem außen an dem Schaft (304) angeformten Teller (305), der an der Stirnseite des Ventilkolbens (3) anliegt, von einem innen an dem Schaft (304) angeformten Stößel (306), der in einer Sackbohrung (202) in der Spindel (2) geführt ist, und von einer Schraubfeder (307) gebildet ist, die zwischen den einander zugewandten Stirnseiten des Schafts (304) und der Spindel (2) angeordnet ist.

12. Ventiloberteil nach einem der Ansprüche 1 bis 11, dadurch gekennzeichnet, daß das Kopfstück (1) in seiner Wandung im bestand von dem Dichtring (5) mit Fenstern (17) für den Durchtritt eines zwischen dem Dichtring (5) und dem Ventilkolben (3) durchströmenden Mediums versehen ist.

13. Ventiloberteil nach Anspruch 12, dadurch gekennzeichnet, daß die Fenster (17) ausgehend von der dem Dichtring (5) zugewandten Kante in der Breite zu- oder abnehmend ausgebildet sind.

14. Ventiloberteil nach einem der Ansprüche 1 bis 13, dadurch gekennzeichnet, daß das Kopfstück (1) zweiteilig ausgeführt ist.

15. Ventiloberteil nach Anspruch 14, dadurch gekennzeichnet, daß auf das Kopfstück (1) ein Kopfstückaufsatz (4) geschraubt ist.

16. Ventiloberteil nach Anspruch 14 oder 15, dadurch gekennzeichnet, daß von dem Kopfstück (1) oder dem Kopfstückaufsatz (4) ein von einer Lastscheibe (113) stirnseitig abgedecktes, innen an der Spindel (2) anliegendes Gleitlager (112) gehalten ist.

17. Ventiloberteil nach Anspruch 14 oder 15, dadurch gekennzeichnet, daß von dem Kopfstück (1) oder dem Kopfstückaufsatz (4) eine einstellbare, innen an der Spindel (2) anliegende Spindelbremse gehalten ist.

## Claims

1. An upper valve part for fixtures, in which an axially movable valve piston (3) and a rotatable spindle (2) are guided in a headpiece (1) and are connected with one another via a thread (24; 32), characterised in that a sealing ring (5) is held by the headpiece (1), which sealing ring projects beyond the end face of the headpiece (1) facing the supply duct and is designed on the projecting outer end face as a surface (54) for resting against a valve seat (62) and on the opposite inner side as a lip seal (52), which cooperates with the valve piston (3), which in its section cooperating with the lip seal is designed in a flat and seal-free manner.

2. An upper valve part according to claim 1, characterised in that the sealing ring (5) comprises a central section (53), which is held by the headpiece (1) and onto which is formed on the one hand the lip seal (52) and on the other hand an extension (55) designed in the manner of a spring disc and comprising the bearing surface (54) for the valve seat (62).

3. An upper valve part according to claim 2, characterised in that the central section (53), the lip seal (52) and the extension (55) have trapezoidal cross sections.

4. An upper valve part according to claims 2 or 3, characterised in that a collar (56) which engages in a groove in the headpiece (1) is formed onto the outer surface of the central section (53).

5. An upper valve part according to one of claims 2 to 4, characterised in that the extension (55) is provided with annular grooves (57) on its bearing surface (54).

6. An upper valve part according to one of claims 1 to 5, characterised in that abutments are provided in the headpiece (1) for limiting the axial movement of the valve piston (3).

7. An upper valve part according to claim 6, characterised in that a snap ring (16) is inserted in the headpiece (1) approximately at the height of the lip seal (52), against which snap ring the valve piston (3) strikes in its lower end position.

8. An upper valve part according to claim 6, characterised in that a flange (25) is formed onto the spindle (2) at a distance from the thread (24, 32), against which flange the valve piston (3) strikes in its upper end position.

9. An upper valve part according to one of claims 1 to 8, characterised in that the valve piston (3) is designed as a continuous disc (311) on the end face facing the sealing ring (5).

10. An upper valve part according to one of claims 1 to 8, characterised in that the valve piston (3) is provided with a reflux prevention means (303).

11. An upper valve part according to claim 10, characterised in that the reflux prevention means (303) is formed by a shaft (304), which is held in a bore (302) provided in the end face of the valve piston (3) facing the supply duct, a disc (305) which is formed onto the outside of the shaft (304) and rests against the end face of the valve piston (3), a plunger (306) which is formed onto the shaft (304) on the inside and is guided in a blind bore (202) in the spindle (2), and a helical spring (307), which is arranged between the opposing end faces of the shaft (304) and the spindle (2).

12. An upper valve part according to one of claims 1 to 11, characterised in that the headpiece (1) is provided in its wall at a distance from the sealing ring (5) with windows (17) for the passage of a medium flowing between the sealing ring (5) and the valve piston (3).

13. An upper valve part according to claim 12, characterised in that the windows (17) increase or decrease in width starting from the edge facing the sealing ring (5).

14. An upper valve part according to one of claims 1 to 13, characterised in that the headpiece (1) is designed in two parts.

15. An upper valve part according to claim 14, characterised in that a headpiece attachment (4) is screwed onto the headpiece (1).

16. An upper valve part according to claim 14 or 15, characterised in that a slide bearing (112) resting on the inside against the spindle (2) and covered by a load disc (113) on its end face is held by the headpiece (1) or the headpiece attachment (4).

17. An upper valve part according to claim 14 or 15, characterised in that an adjustable spindle brake resting on the inside against the spindle (2) is held by the headpiece (1) or the headpiece attachment (4).

## Revendications

1. Tête de robinet pour des appareils de robinetterie dans laquelle un piston à soupape (3) mobile dans le sens axial et une broche tournante (2) reliés entre eux par l'intermédiaire d'un filetage (24; 32), sont guidés dans un élément de tête (1), **caractérisée** **en ce** que l'élément de tête (1) porte un joint d'étanchéité (5) qui dépasse de la face frontale dudit élément de tête (1) dirigée vers l'arrivée et est réalisé sur la face frontale extérieure en saillie, sous la forme d'une surface (54) pour l'application statique contre un siège de soupape (62) et, sur la face frontale intérieure opposée, sous la forme d'un joint à lèvres (52) qui coopère avec le piston à soupape (3), et que la partie du piston à soupape (3) coopérant avec le joint à lèvres est plane et dépourvue de joint d'étanchéité.

2. Tête de robinet selon la revendication 1, caractérisée en ce que le joint d'étanchéité (5) comprend une partie centrale (53) maintenue par l'élément de tête (1), et sur laquelle sont conformés d'un côté le joint à lèvres (52) et, de l'autre côté, un embout (55) qui comporte la surface d'appui (54) pour le siège de soupape (62) et est réalisé à la manière d'une coupelle de ressort.

3. Tête de robinet selon la revendication 2, caractérisée en ce que la partie centrale (53), le joint à lèvres (52) et l'embout (55) présentent une section transversale de forme trapézoïdale.

4. Tête de robinet selon l'une des revendications 2 ou 3, caractérisée en ce que sur la surface extérieure de la partie centrale (53) est conformé un collet (56) qui s'engage dans une rainure ménagée dans l'élément de tête (1).

5. Tête de robinet selon l'une des revendications 2 à 4, caractérisée en ce que l'embout (55) est pourvu sur sa surface d'appui (54) d'entailles annulaires (57).

6. Tête de robinet selon l'une des revendications 1 à 5, caractérisée en ce que dans l'élément de tête (1) sont prévues des butées pour la limitation du mouvement axial du piston à soupape (3).

7. Tête de robinet selon la revendication 6, caractérisée en ce que, sensiblement au niveau du joint à lèvres (52), un jonc (16) contre lequel le piston à soupape (3) bute dans sa position de fin de course inférieure, est inséré dans l'élément de tête (1).

8. Tête de robinet selon la revendication 6, caractérisée en ce que sur la broche (2), à distance du filetage (24, 32), est conformée une bride (25) contre laquelle le piston à soupape (3) bute dans sa position de fin de course supérieure.

9. Tête de robinet selon l'une des revendications 1 à 8, caractérisée en ce que, du côté frontal dirigé vers le joint d'étanchéité (5), le piston à soupape (3) est réalisé sous la forme d'un plateau (311) non ajouré.

10. Tête de robinet selon l'une des revendications 1 à 8, caractérisée en ce que le piston à soupape (3) est muni d'un système anti-refluement (303).

11. Tête de robinet selon la revendication 10, caractérisée en ce que le système anti-refluement (303) comprend une tige (304) maintenue dans un alésage (302) prévu dans la surface frontale du piston à soupape (3) tournée vers l'arrivée, un plateau (305) conformé extérieurement sur la tige (304) et appliqué contre la surface frontale du piston à soupape (3), un poussoir (306) conformé intérieurement sur la tige (304) et guidé dans un trou borgne (202) ménagé dans la broche (2), et un ressort cylindrique (307) disposé entre les surfaces frontales de la tige (304) et de la broche (2) tournées l'une vers l'autre.

12. Tête de robinet selon l'une des revendications 1 à 11, caractérisée en ce que l'élément de tête (1) comporte dans sa paroi, à distance du joint d'étanchéité (5), des fenêtres (17) pour le passage d'un fluide circulant entre le joint d'étanchéité (5) et le piston à soupape (3).

13. Tête de robinet selon la revendication 12, caractérisée en ce que, en partant de l'arête tournée vers le joint d'étanchéité (5), les fenêtres (17) présentent une largeur croissante ou décroissante.

14. Tête de robinet selon l'une des revendications 1 à 13, caractérisée en ce que l'élément de tête (1) est réalisé en deux parties.

15. Tête de robinet selon la revendication 14, caractérisée en ce que sur l'élément de tête (1) est vissé un chapeau (4) d'élément de tête.

16. Tête de robinet selon l'une des revendications 14 ou 15, caractérisée en ce que l'élément de tête (1) ou le chapeau (4) de l'élément de tête porte un palier lisse (112) recouvert frontalement par un disque de lest (113) et appliqué intérieurement contre la broche (2).

17. Tête de robinet selon l'une des revendications 14 ou 15, caractérisée en ce que l'élément de tête (1) ou le chapeau (4) de l'élément de tête porte un frein de broche réglable et appliqué intérieurement contre la broche (2).
